# EUROPEAN PATENT APPLICATION

(11) **EP 4 797 094 A1**
(43) Date of publication of application: **26.08.2026**
(21) Application number: 25766466.4
(22) Date of filing: 05.09.2025
(51) Int. Cl.: G06F 9/48

(54) **TASK EXECUTION METHOD, BASEBOARD MANAGEMENT CONTROLLER, STORAGE MEDIUM AND ELECTRONIC DEVICE**

(30) Priority: 12.11.2024 CN 202411608920
(71) Applicant: Suzhou Metabrain Intelligent Technology Co., Ltd., Suzhou, Jiangsu 215000 (CN)
(72) Inventor: WANG, Xiangyu, Suzhou, Jiangsu 215000 (CN)
(74) Representative: Studio Torta S.p.A.
(86) International application number: PCT/CN2025/119462
(87) International publication number: WO 2026/103291

(57) **Abstract**

Provided are a task execution method, a baseboard management controller, a storage medium, an electronic device and a computer program product. The method comprises: in a case where a target task needs to be executed by means of a target thread, acquiring a target execution time condition of the target task, the target execution time condition comprising a pre-configured target execution time period that indicates a time period during which the target task is allowed to be executed; determining, according to the target execution time condition, whether to invoke the target thread to execute the target task, wherein in a case where it is determined that a system time is within the target execution time period, the target thread is invoked to execute the target task; and in a case where it is determined that the system time is not within the target execution time period, a waiting operation is executed until the system time is within the target execution time period, at which point the target thread is invoked to execute the target task.

## Description

### Cross-Reference to Related Application

The present disclosure claims priority to Chinese Patent Application no. 202411608920.1, filed in the China National Intellectual Property Administration on 12 November 2024, and entitled "Task Execution Method, Baseboard Management Controller, Storage Medium and Electronic Device", which is incorporated herein by reference in its entirety.

### Technical Field

The embodiments of the present disclosure relate to the field of computers, and in particular, to a task execution method, a baseboard management controller, a storage medium, an electronic device, and a computer program product.

### Background

With the increase of the speed of processors and the emergence of multi-core processors, an operating system gradually supports a plurality of tasks to be executed simultaneously, the utilization efficiency of a central processing unit (CPU) and the response speed of a system are significantly improved. In related art, when performing multitasking in a system, the operating system may have the problem of lower stability due to reasons such as multiple tasks potentially needing to access and modify the same resource, or insufficient server resources during concurrent task execution.

### Summary

Embodiments of the present disclosure provide a task execution method, a baseboard management controller, a storage medium, an electronic device and a computer program product, so as to at least solve the problem in the related art that the operating system may have lower stability due to reasons such as multiple tasks potentially needing to access and modify the same resource, or insufficient server resources during concurrent task execution.

According to an embodiment of the present disclosure, a task execution method is provided, the task execution method includes: in a case where a target task needs to be executed by means of a target thread, acquiring a target execution time condition of the target task, wherein the target execution time condition includes a pre-configured target execution time period that indicates a time period during which the target task is allowed to be executed; determining, according to the target execution time condition, whether to invoke the target thread to execute the target task, wherein, in a case where it is determined that a system time is within the target execution time period, the target thread is invoked to execute the target task; in a case where it is determined that the system time is not within the target execution time period, a waiting operation is executed until the system time is within the target execution time period, at which point the target thread is invoked to execute the target task.

In an exemplary embodiment, before acquiring the target execution time condition of the target task, the method further includes: receiving an execution time condition setting instruction, wherein the execution time condition setting instruction includes one or more execution time conditions; and configuring the one or more execution time conditions in a baseboard management controller.

In an exemplary embodiment, at least one of the following is included: execution time conditions corresponding to different tasks are all the same; execution time conditions corresponding to different tasks are mutually different; and different task sets corresponding to different execution time conditions, wherein each of the task sets includes one or more tasks, and all the tasks included in the same task set correspond to the same execution time condition.

In an exemplary embodiment, receiving the execution time condition setting instruction includes: receiving a time period setting instruction that is input or that is from another device, wherein the time period setting instruction includes a first time period in which tasks are allowed to be executed and/or a second time period in which tasks are not allowed to be executed; configuring one or more execution time conditions in the baseboard management controller includes: setting the one or more execution time conditions in the baseboard management controller according to the period setting instruction.

In an exemplary embodiment, the method further includes: determining whether the system time is within the target execution time period in the following manner: and acquiring a target semaphore; in a case where it is determined, according to the target semaphore, that there is no target lock file in the baseboard management controller, determining that the system time is within the target execution time period; and in a case where it is determined, according to the target semaphore, that there is a target lock file in the baseboard management controller, determining that the system time is not within the target execution time period.

In an exemplary embodiment, before acquiring the target execution time condition of the target task, the method further includes: configuring an association relationship between a plurality of maintenance locks and a plurality of tasks; wherein for one or more tasks associated with one maintenance lock, whether the execution time condition of the one or more tasks is satisfied currently is determined according to the states of the maintenance lock, and state adjustment conditions of different maintenance locks are not completely the same.

In an exemplary embodiment, before configuring the association relationship between the plurality of maintenance locks and the plurality of tasks, the method further includes: creating the plurality of maintenance locks; configuring the association relationship between the plurality of maintenance locks and the plurality of tasks includes: configuring the association relationship between the plurality of maintenance locks and the plurality of tasks according to a received configuration instruction and/or a default configuration mode.

In an exemplary embodiment, configuring the association relationship between the plurality of maintenance locks and the plurality of tasks includes at least one of the following: configuring a one-to-one corresponding association relationship between the plurality of maintenance lock and the plurality of tasks; and configuring a one-to-many association relationship between the plurality of maintenance lock and the plurality of tasks.

In an exemplary embodiment, the method further includes: configuring a corresponding openting time period for each maintenance lock; wherein the opening time periods corresponding to different maintenance locks are not completely the same, the state of the maintenance lock in the corresponding opening time period is open, and the state of the maintenance lock in time periods other than the corresponding opening time period is closed; for one or more tasks associated with a maintenance lock currently in an open state, the system time is within an execution time period of the one or more tasks; and for one or more tasks associated with a maintenance lock currently in a closed state, the system time is not within the execution time period of the one or more tasks.

In an exemplary embodiment, the method further includes: in a case where it is detected that a difference between a computer system time and a time determined by a counter set in the baseboard management controller is larger than a predetermined threshold, configuring the states of all the maintenance locks to be closed.

In an exemplary embodiment, the method further includes: receiving an adjustment instruction of the plurality of maintenance locks; and adjusting, according to the adjustment instruction, the plurality of maintenance locks which are configured; wherein a manner of adjustment the plurality of maintenance locks includes at least one of: deleting one or more existing maintenance locks, adding one or more new maintenance locks, and adjusting the opening time period of the one or more existing maintenance locks.

In an exemplary embodiment, the target task includes at least one of the following: a software upgrade task, a configuration task, a backend task and a power supply operation task.

According to another embodiment of the present disclosure, a baseboard management controller is provided, baseboard management controller includes: an acquisition module, configured to acquire a target execution time condition of the target task in a case where a target task needs to be executed by means of a target thread, wherein the target execution time condition includes a pre-configured target execution time period that indicates a time period during which the target task is allowed to be executed; a determination module, configured to determine, according to the target execution time condition, whether to invoke the target thread to execute the target task, wherein in a case where it is determined that a system time is within the target execution time period, the target thread is invoked to execute the target task; and in a case where it is determined that the system time is not within the target execution time period, a waiting operation is executed until the system time is within the target execution time period, at which point the target thread is invoked to execute the target task.

According to another embodiment of the present disclosure, a non-volatile computer-readable storage medium is also provided, wherein the computer program is configured to execute, when running, the operations in any one of the described method embodiments.

According to another embodiment of the present disclosure, an electronic device is further provided, the electronic device includes a memory and a processor, wherein the memory stores a computer program, and the processor is configured to run the computer program to execute the operations in any one of the method.

According to another embodiment of the present disclosure, a computer program product is provided, the computer program product includes a computer program, wherein the computer program implements the operations of any one of the foregoing method embodiments when being executed by the processor.

By means of the present disclosure, in a case where a target task needs to be executed by means of a target thread, it is first determined whether an execution condition of the target task is satisfied, and in a case where the execution condition of the target task is satisfied, the target thread is invoked to execute the target task, thereby ensuring that the task is executed in an appropriate condition (for example, system resources are sufficient, there is no collision tasks of current tasks, etc.), and therefore, it solves the problem in the related art that the operating system may have lower stability due to reasons such as multiple tasks potentially needing to access and modify the same resource, or insufficient server resources during concurrent task execution, thereby achieving the effects of avoiding a task execution conflict in a system and improving the resource utilization rate.

### Brief Description of the Drawings

Fig. 1 is a hardware structural block diagram of a server device in a task execution method according to an embodiment of the present disclosure;
Fig. 2 is a first flowchart of a task execution method according to an embodiment of the present disclosure;
Fig. 3 is a second flowchart of a task execution method according to an embodiment of the present disclosure;
Fig. 4 is a schematic diagram of a task execution method according to an embodiment of the present disclosure;
Fig. 5 is a structural block diagram of a baseboard management controller according to an embodiment of the present disclosure.

### Detailed Description of the Embodiments

The embodiments of the present disclosure are described in detail with reference to the accompanying drawings and in conjunction with the embodiments.

It should be noted that, the terms "first", "second", etc. in the description, claims and drawings of the present disclosure are used to distinguish similar objects, and do not need to be used to describe a specific order or sequence.

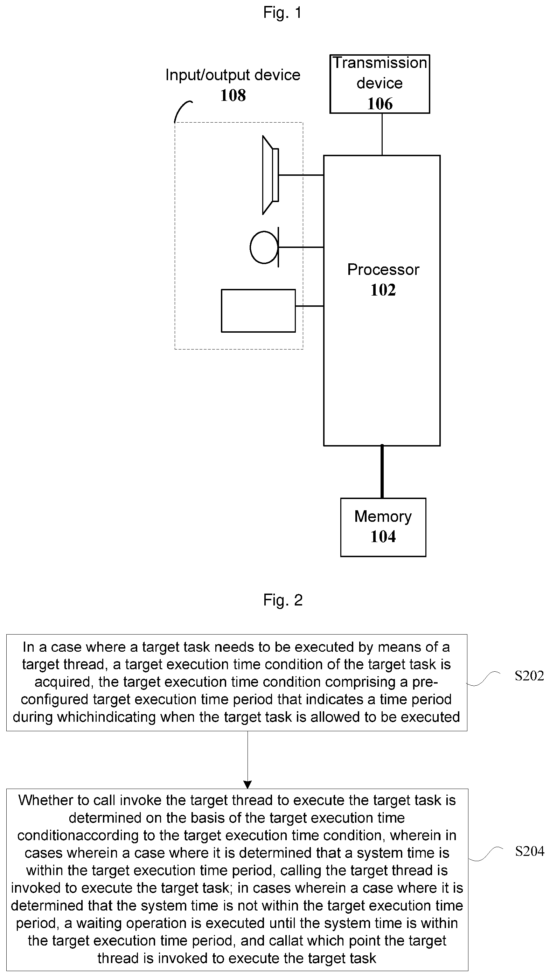

The method embodiments provided in the embodiments of the present disclosure may be executed in a server device or a similar computing device. Taking the operation on a server device as an example, Fig. 1 is a hardware structural block diagram of a server device in a task execution method according to an embodiment of the present disclosure. As shown in Fig. 1, the server device may include one or more (only one is shown in Fig. 1) processors 102 (a processor 102 may include, but is not limited to, a processing device such as a Microcontroller Unit (MCU) or a Field-Programmable Gate Array (FPGA)) and a memory 104 which is configured to store data, wherein the server device may further include a transmission device 106 for a communication function and an input/output device 108. A person of ordinary skill in the art would understand that the structure shown in Fig. 1 is merely exemplary, and does not limit the structure of the described server device. For example, the server device may also include more or fewer components than those shown in Fig. 1, or the server device may have different configurations from that shown in Fig. 1.

The memory 104 may be configured to store a computer program, for example, a software program and a module of application software, such as a computer program corresponding to the task execution method in the embodiments of the present disclosure. The processor 102 runs the computer program stored in the memory 104, so as to execute various function applications and data processing, that is, to implement the foregoing method. The memory 104 may include a high-speed random access memory, and may also include a non-transitory memory, such as one or more magnetic storage apparatuses, flash memories, or other non-transitory solid-state memories. In some instances, the memory 104 may further include memories remotely arranged with respect to the processor 102, and these remote memories may be connected to the server device over a network. Examples of the network above includes, but is not limited to, an Internet, intranets, a local area network, a mobile communication network, and combinations thereof.

The transmission device 106 is configured to receive or transmit data via a network. Examples of the described network may include a wireless network provided by a communication provider of the server device. In one example, the transmission device 106 may includes a network interface controller (NIC) which may be connected to other network devices via a base station, thereby being able to communicate with the Internet. In one example, the transmission device 106 may be a radio frequency (RF) module configured to communicate with the Internet wirelessly.

Provided in the present embodiment is a task execution method. Fig. 2 is a first flowchart of a task execution method according to an embodiment of the present disclosure. As shown in Fig. 2, the method includes the following operations:
operation S202, in a case where a target task needs to be executed by means of a target thread, acquiring a target execution time condition of the target task, wherein the target execution time condition includes a pre-configured target execution time period that indicates a time period during which the target task is allowed to be executed;
operation S204: determining, according to the target execution time condition, whether to invoke the target thread to execute the target task, wherein, in a case where it is determined that a system time is within the target execution time period, the target thread is invoked to execute the target task; in a case where it is determined that the system time is not within the target execution time period, a waiting operation is executed until the system time is within the target execution time period, at which point the target thread is invoked to execute the target task.

In the above operations, the target thread includes, but is not limited to, a user thread, a kernel thread, a daemon thread, a working thread, a timer thread, an asynchronous I/O thread, a main thread, a rendering thread, a network thread, a database thread, etc.; the target task includes, but is not limited to, a data backup task, a system maintenance task, a data synchronization task, a report generation task, a batch processing task, a log cleaning task, a resource monitoring task, a database optimization task, etc.; and the system time may be determined by, but not limited to, determined by checking the system clock by means of a command line tool, acquiring time information from a Network Time Protocol (NTP) server by means of the NTP, etc.

Exemplarily, in a case where the target task is a data backup task, a target execution time condition of the data backup task is queried to obtain that the target execution time condition is to execute the data backup task from 2:00 a.m to 4:00 a.m each day, and in a case where the current time is within a time period from 2:00 a.m to 4:00 a.m, the target thread is invoked to execute the data backup task; in a case where the current time is not within the time period from 2:00 a.m to 4:00 a.m each day, the waiting operation is executed until 2:00 a.m. is reached, and then the target thread is invoked to execute the data backup task.

By means of the described operations, in a case where a target task needs to be executed by means of a target thread, it is first determined whether an execution condition of the target task is satisfied, and in a case where the execution condition of the target task is satisfied, the target thread is invoked to execute the target task, thereby ensuring that the task is executed in an appropriate condition (for example, system resources are sufficient, there is no collision tasks of current tasks, etc.), and therefore, it solves the problem in the related art that the operating system may have lower stability due to reasons such as multiple tasks potentially needing to access and modify the same resource, or insufficient server resources during concurrent task execution, thereby avoiding a task execution conflict in a system and improving the resource utilization rate.

The entity executing the above operations may be a baseboard management controller, other apparatuses capable of implementing a similar function, etc.

In some embodiments, before acquiring the target execution time condition of the target task, the method further includes: receiving an execution time condition setting instruction, wherein the execution time condition setting instruction includes one or more execution time conditions; and configuring the one or more execution time conditions in the baseboard management controller.

In the foregoing operations, receiving the execution time condition setting instruction includes, but is not limited to: receiving the execution time condition setting instruction input by a system administrator via a management software interface or receiving the execution time condition setting instruction configured by a command line tool, or receiving the execution time condition setting instruction sent based on an intelligent platform management interface (IPMI) protocol, etc.

Exemplarily, in the following, in a scenario in which a target task is a maintenance task, the process in which a user configures an execution time condition in a baseboard management controller by means of front-end configuration software of the baseboard management controller is described in details with reference to an example:
finding a "firmware and operating system software" option in the front-end configuration software of the baseboard management controller; under the option, further clicking "maintenance time period" to enter a configuration interface of the maintenance time period; on the interface of the maintenance time period, clicking an "add" button, and performing the following operations: inputting a name in a name box for identifying the maintenance time period; inputting a piece of description in a description box to describe the purpose or feature of the maintenance time period in detail; inputting the start and end time of maintenance time period in start and end boxes; and clicking "complete adding".

In some embodiments, at least one of the following is included: execution time conditions corresponding to different tasks are all the same; execution time conditions corresponding to different tasks are mutually different; and different task sets corresponding to different execution time conditions, wherein each of the task sets includes one or more tasks, and all the tasks included in the same task set correspond to the same execution time condition.

In some embodiments, receiving the execution time condition setting instruction includes: receiving a time period setting instruction that is input or that is from another device, wherein the time period setting instruction includes a first time period in which tasks are allowed to be executed and/or a second time period in which tasks are not allowed to be executed; configuring one or more execution time conditions in a baseboard management controller includes: setting the one or more execution time conditions in the baseboard management controller according to the period setting instruction.

In the foregoing operations, for example, tasks such as log cleaning and system maintenance are allowed to be executed only at 2:00 a.m to 4:00 a.m and are not executable at other time.

In some embodiments, the method further includes: determining whether the system time is within the target execution time period in the following manner: and acquiring a target semaphore; in a case where it is determined according to the target semaphore that there is no target lock file in the baseboard management controller, determine that the system time is within the target execution time period; and in a case where it is determined according to the target semaphore that there is a target lock file in the baseboard management controller, determining that the system time is not within the target execution time period.

In the described operations, the existence time of the target lock file may be determined according to a predetermined setting and a received setting instruction; and the predetermined setting may be adjusted according to different device types and application scenarios. In the foregoing operations, whether the system time is within the target execution time period is determined by whether there is a target lock file in the baseboard management controller, so that the target task may be managed uniformly, thereby improving the stability of the system.

In some embodiments, before acquiring the target execution time condition of the target task, the method further includes: configuring an association relationship between a plurality of maintenance locks and a plurality of tasks; wherein for one or more tasks associated with one maintenance lock, whether the execution time condition of the one or more tasks is satisfied currently is determined according to the states of the maintenance lock, and state adjustment conditions of different maintenance locks are not completely the same.

In the above operation, the plurality of maintenance locks include, but are not limited to: mutex locks, read-write locks, spin locks, semaphores, custom file locks, etc., exemplarily, an association relationship between a configuration maintenance lock and a task is exemplarily described in the following with reference to a scenario: there are a plurality of maintenance locks in a maintenance window management center of a baseboard management controller, such as an upgrade lock and a power supply operation lock; the upgrade task is registered under the upgrade lock, so that the registered upgrade task may only be executed when the execution time condition of the upgrade lock is met and the upgrade lock is open; when the upgrade lock is closed, the upgrade task is in a stopped or blocked state; the power operation task (e.g., power on, power off, sleep, etc.) is registered under the power operation lock, so that the registered power operation task may only be executed when the execution time condition of the power operation lock is met and the power operation lock is open. Exemplarily, a correlation between a task and a maintenance lock may be determinerd by, but is not limited to, the following manners: determining the correlation between the task and the maintenance lock according to a task attribute (for example, registering a power operation task to a power lock), determining the correlation between the task and the maintenance lock according to execution time of the task (for example, registering an upgrade task executed in an early morning period to a power lock of which the execution time condition is the early morning period), etc.

In the above operation, by configuring the association relationship between the plurality of maintenance locks and one or more tasks, and determining whether the execution time condition of the task associated with a maintenance lock is satisfied according to the state of the maintenance lock, it is possible to achieve unified execution management of tasks registered under the maintenance locks, thereby achieving precise control of the task execution time, ensuring that tasks are executed within predetermined time, improving the accuracy and reliability of task scheduling, and ensuring that tasks are executed when system resources are sufficient, while avoiding execution when system resources are insufficient, thereby optimizing resource allocation and utilization.

In some embodiments, in a case where there are a target lock file and a plurality of maintenance locks in the baseboard management controller, the target lock file manages the multiple maintenance locks in ways including but not limited to the following: in a case where there is a target lock file, all tasks managed by the multiple maintenance locks are not executable; and in a case where there is no target lock file, the execution time conditions of the tasks managed by the plurality of maintenance locks are adjusted by the corresponding maintenance locks.

In the described operation, the execution of a task is managed by means of a combination of a target lock file and a maintenance lock, so that fine control over the execution of the task may be realized, the security, stability and resource utilization efficiency of a system are improved, a task conflict is reduced, and the monitoring and maintenance of the system are facilitated.

In some embodiments, before configuring the association relationship between the plurality of maintenance locks and the plurality of tasks, the method further includes: creating the plurality of maintenance locks; configuring the association relationship between the plurality of maintenance locks and the plurality of tasks, includes: configuring the association relationship between the plurality of maintenance locks and the plurality of tasks according to a received configuration instruction and/or a default configuration mode.

In the above operation, exemplarily, each task process thread in the baseboard management controller registers a target task corresponding to the received configuration instruction and/or a default configuration mode to a unique maintenance lock under the maintenance window management center, and synchronizes information of the target task to the corresponding maintenance lock.

In some embodiments, configuring the association relationship between the plurality of maintenance locks and the plurality of tasks includes at least one of the following: configuring a one-to-one corresponding association relationship between the plurality of maintenance lock and the plurality of tasks; and configuring a one-to-many association relationship between the plurality of maintenance lock and the plurality of tasks.

In the foregoing operation, the plurality of maintenance locks are associated with one or more tasks, and each task is only registered to a unique maintenance lock. Since each task is only registered to a unique maintenance lock, it prevents the conflict in task management that would arise in a case where the same task is within the target execution time period under one maintenance lock while being outside the target execution time period under another maintenance lock at the same time.

In some embodiments, the method further includes: configuring a corresponding opening time period for each maintenance lock; wherein the opening time periods corresponding to different maintenance locks are not completely the same, the state of the maintenance lock in the corresponding opening time period is open, and the state of the maintenance lock in time periods other than the corresponding opening time period is closed; for one or more tasks associated with a maintenance lock currently in an open state, the system time is within an execution time period of the one or more tasks; and for one or more tasks associated with a maintenance lock currently in a closed state, the system time is not within the execution time period of the one or more tasks.

In some embodiments, the method further includes: in a case where it is detected that a difference between a computer system time and a time determined by a counter set in the baseboard management controller is larger than a predetermined threshold, configuring the states of all the maintenance locks to be closed.

In the foregoing operation, the predetermined threshold includes, but is not limited to, 10 minutes, 20 minutes, 1 hour, and the like. The predetermined threshold may be adjusted according to different device types and application scenarios. Exemplarily, the time difference between the current time and the start time of the execution time period of one or more tasks corresponding to the maintenance lock is determined according to the time of the computer system; and in a case where the difference between the time difference and the remaining time of arrival of the start time of the execution period determined by the counter and configured within the baseboard management controller is larger than a predetermined threshold, the states of all the maintenance locks are configured to be closed.

In the described operation, when the difference between the time of the computer system and the time determined by the counter is larger than a predetermined threshold, all the maintenance locks are closed, thereby avoiding the problem of anomalous task execution caused by the disordered time of the computer system, and improving the security and stability of the system.

In some embodiments, the method further includes: receiving an adjustment instruction of the plurality of maintenance locks; and adjusting, according to the adjustment instruction, the plurality of maintenance locks which are configured; wherein a manner of adjustment the plurality of maintenance locks includes at least one of: deleting one or more existing maintenance locks, adding one or more new maintenance locks, and adjusting the opening time period of the one or more existing maintenance locks.

In the foregoing operation, the execution time periods of one or more target tasks corresponding to the plurality of maintenance locks may be the same or different. Exemplarily, the execution time period of the task under the power supply lock is 8:00 a.m to 23:00, the execution time period of the task under the upgrade lock is 24:00 to 7:00 a.m, and the execution time period of the task under the read/write lock is 1:00 a.m to 24:00.

In the foregoing operation, since the maintenance lock may be adjusted according to the adjustment instruction, accurate control of the execution time of the target task may be achieved, thereby reducing risks caused by executing the target task at inappropriate time, and improving stability and security of the system.

In some embodiments, the target task includes at least one of the following: a software upgrade task, a configuration task, a backend task and a power supply operation task.

The solutions of the present disclosure will be described below in conjunction with the embodiments:

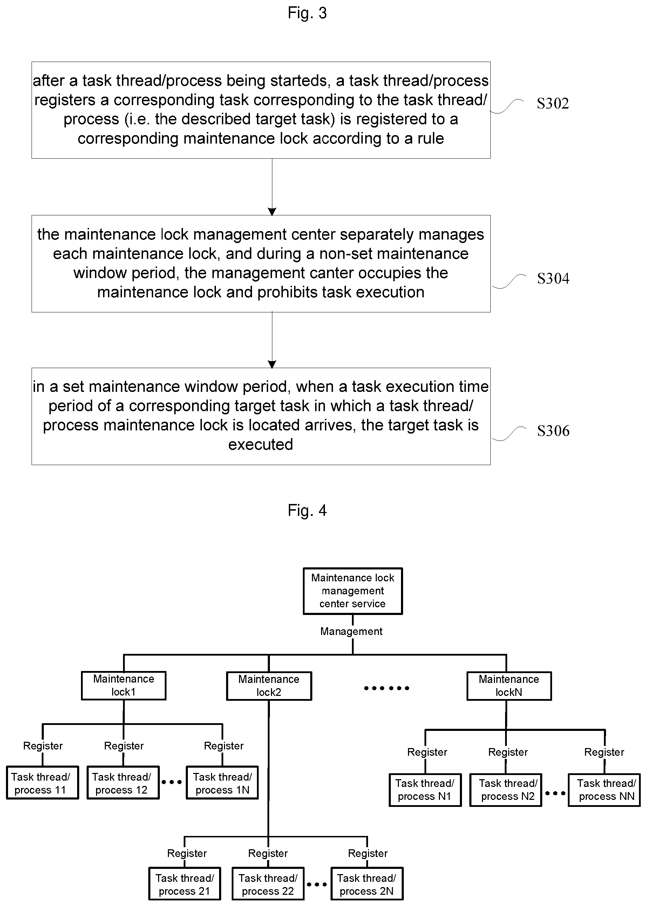

Fig. 3 is a second flowchart of a task execution method according to an embodiment of the present disclosure; and Fig. 4 is a schematic diagram of a task execution method according to an embodiment of the present disclosure. As shown in Fig. 3, the flow includes the following operations:
operation S302: after a task thread/process starts, a task corresponding to the task thread/process (i.e. the described target task) is registered to a corresponding maintenance lock according to a rule;
operation S304: the maintenance lock management center separately manages each maintenance lock, and during a non-set maintenance window period, the management canter occupies the maintenance lock and prohibits task execution; and
operation S306: in a set maintenance window period, when a task execution time period of a corresponding target task in which a task thread/process maintenance lock is located arrives, the target task is executed.

In the above operation, by establishing a registration and association mechanism between maintenance lock management, central maintenance locks, and tasks, a maintenance window management system is created that allows multiple locks to independently manage associated tasks. By configuring multiple maintenance locks, maintenance personnel in different roles may set and manage their own locks according to their responsibilities and task schedules, thereby achieving non-interference between roles and improving the coordination and efficiency of maintenance work.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

The present embodiment further provides a baseboard management controller apparatus. The apparatus is configured to implement the foregoing embodiments and optional implementations, which has been described and will not be described repeatedly here. As used below, the term "module" may implement a combination of software and/or hardware of predetermined functions. Although the apparatus described in the following embodiments is preferably implemented in software, implementation in hardware or a combination of software and hardware is also possible and conceived.

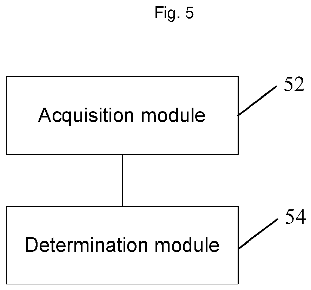

Fig. 5 is a structural block diagram of a baseboard management controller according to an embodiment of the present disclosure. As shown in Fig. 5, the baseboard management controller includes: an acquisition module 52, configured to acquire a target execution time condition of the target task in a case where a target task needs to be executed by means of a target thread, the target execution time condition includes a pre-configured target execution time period that indicates a time period during which the target task is allowed to be executed; a determination module 54, configured to determine, according to the target execution time condition, whether to invoke the target thread to execute the target task, wherein in a case where it is determined that a system time is within the target execution time period, the target thread is invoked to execute the target task; and in a case where it is determined that the system time is not within the target execution time period, a waiting operation is executed until the system time is within the target execution time period, at which point the target thread is invoked to execute the target task.

In some embodiments, the baseboard management controller further includes: a first receiving module, configured to receive an execution time condition setting instruction before acquiring the target execution time condition of the target task, wherein the execution time condition setting instruction includes one or more execution time conditions; a first configuration module, arranged to configure the one or more execution time conditions in a baseboard management controller.

In some embodiments, at least one of the following is included: execution time conditions corresponding to different tasks are all the same; execution time conditions corresponding to different tasks are mutually different; and different task sets corresponding to different execution time conditions, wherein each of the task sets includes one or more tasks, and all the tasks included in the same task set correspond to the same execution time condition.

In some embodiments, the first receiving module includes: a receiving unit, configured to receive a time period setting instruction that is input or that is from another device, wherein the time period setting instruction includes a first time period in which tasks are allowed to be executed and/or a second time period in which tasks are not allowed to be executed; a first configuration unit, configured to set the one or more execution time conditions in the baseboard management controller according to the period setting instruction.

In some embodiments, the baseboard management controller further includes: a determination module, configured to determine whether the system time is within the target execution time period in the following manner: acquiring a target semaphore; in a case where it is determined according to the target semaphore that there is no target lock file in the baseboard management controller, determine that the system time is within the target execution time period; and in a case where it is determined according to the target semaphore that there is a target lock file in the baseboard management controller, determining that the system time is not within the target execution time period.

In some embodiments, the baseboard management controller further includes: a second configuration module, arranged to configure an association relationship between a plurality of maintenance locks and a plurality of tasks before acquiring the target execution time condition of the target task; wherein for one or more tasks associated with one maintenance lock, whether the execution time condition of the one or more tasks is satisfied currently is determined according to the states of the maintenance lock, and state adjustment conditions of different maintenance locks are not completely the same.

In some embodiments, the baseboard management controller further includes: a creation module, configured to create a plurality of maintenance locks before configuring the association relationship between the plurality of maintenance locks and the plurality of tasks; the second configuration module includes: a second configuration unit, arranged to configure the association relationship between the plurality of maintenance locks and the plurality of tasks according to a received configuration instruction and/or a default configuration mode.

In some embodiments, the second configuration module includes at least one of the following: a third configuration unit, arranged to configure a one-to-one corresponding association relationship between the plurality of maintenance lock and the plurality of tasks; and a fourth configuration unit, arranged to configure a one-to-many association relationship between the plurality of maintenance lock and the plurality of tasks.

In some embodiments, the baseboard management controller further includes: a third configuration module, arranged to configure a corresponding opening time period for each maintenance lock; wherein the opening time periods corresponding to different maintenance locks are not completely the same, the state of the maintenance lock in the corresponding opening time period is open, and the state of the maintenance lock in time periods other than the corresponding opening time period is closed; for one or more tasks associated with a maintenance lock currently in an open state, the system time is within an execution time period of the one or more tasks; and for one or more tasks associated with a maintenance lock currently in a closed state, the system time is not within the execution time period of the one or more tasks.

In some embodiments, the baseboard management controller further includes: a fourth configuration module, arranged to configure the states of all the maintenance locks to be closed in a case where it is detected that a difference between a computer system time and a time determined by a counter set in the baseboard management controller is larger than a predetermined threshold.

In some embodiments, the baseboard management controller further includes: a second receiving module, configured to receive an adjustment instruction of the plurality of maintenance locks; and an adjustment module, configured to adjust, according to the adjustment instruction, the plurality of maintenance locks which are configured; wherein a manner of adjustment the plurality of maintenance locks includes at least one of: deleting existing one or more existing maintenance locks, adding one or more new maintenance locks, and adjusting the opening time period of the one or more existing maintenance locks.

In some embodiments, the target task includes at least one of the following: a software upgrade task, a configuration task, a backend task and a power supply operation task.

It should be noted that the modules above may be implemented by software or hardware, and the latter may be implemented in the following manner, but is not limited to that. All the modules above are located in the same processor; or all the modules above are located in different processors in any arbitrary combination manner.

An embodiment of the present disclosure further provides a computer non-volatile readable storage medium storing a computer program, wherein the computer program is configured to execute, when running, the operations in any one of the described method embodiments.

In an exemplary embodiment, the non-transitory computer readable storage medium may include, but is not limited to, any medium that may store a computer program, such as a USB flash disk, a ROM, a RAM, a removable hard disk, a magnetic disk, or an optical disk.

An embodiment of the present disclosure also provides an electronic device, includes a memory and a processor, wherein the memory stores a computer program, and the processor is configured to run the computer program to execute the operations in any one of the method.

In an exemplary embodiment, the electronic device may further include a transmission device and an input/output device, wherein the transmission device is connected to the processor, and the input/output device is connected to the processor.

An embodiment of the present disclosure further provides a computer program product. The computer program product includes a computer program. When being executed by a processor, the computer program implements operations in any one of the method embodiments.

An embodiment of the present disclosure further provides another computer program product, includes a non-volatile computer-readable storage medium, wherein the non-volatile computer-readable storage medium stores a computer program, and when the computer program is executed by a processor, the operations in any one of the method embodiments are implemented.

The embodiments of the present disclosure further provide a computer program includes a computer instruction, herein the computer instruction is stored in a non-volatile computer-readable storage medium; the processor of the computer device reads the computer instruction from the non-volatile computer-readable storage medium, and the processor executes the computer instruction, so that the computer device executes the operations in any one of the foregoing method embodiments.

For examples in the present embodiment, reference may be made to the examples described in the described embodiments and exemplary embodiments, and thus they will not be repeated again in the present embodiment.

Obviously, those skilled in the art should understand that the modules or operations in the present disclosure may be implemented by using a general computing device, and they may be integrated in a single computing device, and may also be distributed over a network consisting of a plurality of computing devices. They may be implemented by using executable program codes of the computing devices. Thus, they may be stored in a storage device and executed by the computing devices. Furthermore, in some cases, the shown or described operations may be executed in an order different from that described here, or they may be respectively implemented by individual Integrated Circuit modules, or they may be implemented by making a plurality of the modules or operations into a single Integrated Circuit module. Hence, the present disclosure is not limited to any specific combinations of hardware and software.

The described content merely relates to optional embodiments of the present disclosure and is not intended to limit the present disclosure. For a person skilled in the art, the present disclosure may have various modifications and variations. Any modifications, equivalent replacements, improvements, etc. made within the principle of the present disclosure shall all belong to the scope of protection of the present disclosure.

## Claims

1. A task execution method, comprising:
in a case where a target task needs to be executed by means of a target thread, acquiring a target execution time condition of the target task, wherein the target execution time condition comprises a pre-configured target execution time period that indicates a time period during which the target task is allowed to be executed;
determining, according to the target execution time condition, whether to invoke the target thread to execute the target task, wherein, in a case where it is determined that a system time is within the target execution time period, the target thread is invoked to execute the target task; in a case where it is determined that the system time is not within the target execution time period, a waiting operation is executed until the system time is within the target execution time period, at which point the target thread is invoked to execute the target task.

2. The method according to claim 1, wherein before acquiring the target execution time condition of the target task, the method further comprises:
receiving an execution time condition setting instruction, wherein the execution time condition setting instruction comprises one or more execution time conditions; and
configuring the one or more execution time conditions in a baseboard management controller.

3. The method according to claim 2, wherein the method comprises at least one of the following:
execution time conditions corresponding to different tasks are all the same;
execution time conditions corresponding to different tasks are mutually different; and
different task sets correspond to different execution time conditions, wherein each of the task sets comprises one or more tasks, and all the tasks comprised in the same task set correspond to the same execution time condition.

4. The method according to claim 2, wherein
receiving the execution time condition setting instruction comprises: receiving a time period setting instruction that is input or that is from another device, wherein the time period setting instruction comprises a first time period in which tasks are allowed to be executed and/or a second time period in which tasks are not allowed to be executed;
configuring one or more execution time conditions in the baseboard management controller comprises: setting the one or more execution time conditions in the baseboard management controller according to the period setting instruction.

5. The method according to claim 1, wherein the method further comprises:
determining whether the system time is within the target execution time period in the following manner:
acquiring a target semaphore;
in a case where it is determined, according to the target semaphore, that there is no target lock file in the baseboard management controller, determining that the system time is within the target execution time period; and
in a case where it is determined, according to the target semaphore, that there is a target lock file in the baseboard management controller, determining that the system time is not within the target execution time period.

6. The method according to claim 1, wherein before acquiring the target execution time condition of the target task, the method further comprises:
configuring an association relationship between a plurality of maintenance locks and a plurality of tasks;
wherein for one or more tasks associated with one maintenance lock, whether the execution time condition of the one or more tasks is satisfied currently is determined according to the state of the maintenance lock, and state adjustment conditions of different maintenance locks are not completely the same.

7. The method according to claim 6, wherein
before configuring the association relationship between the plurality of maintenance locks and the plurality of tasks, the method further comprises: creating the plurality of maintenance locks;
configuring the association relationship between the plurality of maintenance locks and the plurality of tasks comprises: configuring the association relationship between the plurality of maintenance locks and the plurality of tasks according to a received configuration instruction and/or a default configuration mode.

8. The method according to claim 6, wherein configuring the association relationship between the plurality of maintenance locks and the plurality of tasks comprises at least one of the following:
configuring a one-to-one corresponding association relationship between the plurality of maintenance lock and the plurality of tasks; and
configuring a one-to-many association relationship between the plurality of maintenance lock and the plurality of tasks.

9. The method according to claim 6, wherein the method further comprises:
configuring a corresponding opening time period for each maintenance lock;
wherein the opening time periods corresponding to different maintenance locks are not completely the same, the state of the maintenance lock in the corresponding opening time period is open, and the state of the maintenance lock in time periods other than the corresponding opening time period is closed;
for one or more tasks associated with a maintenance lock currently in an open state, the system time is within an execution time period of the one or more tasks; and for one or more tasks associated with a maintenance lock currently in a closed state, the system time is not within the execution time period of the one or more tasks.

10. The method according to claim 6, wherein the method further comprises:
in a case where it is detected that a difference between a computer system time and a time determined by a counter set in the baseboard management controller is larger than a predetermined threshold, configuring the states of all the maintenance locks to be closed.

11. The method according to claim 6, wherein the method further comprises:
receiving an adjustment instruction of the plurality of maintenance locks; and
adjusting, according to the adjustment instruction, the plurality of maintenance locks which are configured;
wherein a manner of adjusting the plurality of maintenance locks comprises at least one of:
deleting one or more existing maintenance locks, adding one or more new maintenance locks, and adjusting the opening time period of the one or more existing maintenance locks.

12. The method according to any of claims 1 to 11, wherein the target task comprises at least one of the following:
a software upgrade task, a configuration task, a backend task and a power supply operation task.

13. The method according to claim 2, wherein receiving the execution time condition setting instruction comprises at least one of the following:
receiving the execution time condition setting instruction input via a management software interface;
receiving the execution time condition setting instruction configured by a command line tool; and
receiving the execution time condition setting instruction sent based on an intelligent platform management interface protocol.

14. The method according to claim 5, wherein an existence duration of the target lock file is set by at least one of the following manners:
setting the existence duration according to a type and an application scenario of a device that executes the target task; and
setting the existence duration according to a received setting instruction.

15. The method according to claim 6, wherein configuring the association relationship between the plurality of maintenance locks and the plurality of tasks comprises at least one of the following:
configuring the association relationship between the plurality of maintenance locks and the plurality of tasks according to task attributes of the plurality of tasks; and
configuring the association relationship between the plurality of maintenance locks and the plurality of tasks according to execution time of the plurality of tasks.

16. The method according to claim 10, wherein the method further comprises:
setting the predetermined threshold according to a type and an application scenario of a device that executes the target task.

17. A baseboard management controller, comprising:
an acquisition module, configured to acquire a target execution time condition of the target task in a case where a target task needs to be executed by means of a target thread, wherein the target execution time condition comprises a pre-configured target execution time period that indicates a time period during which the target task is allowed to be executed;
a determination module, configured to determine, according to the target execution time condition, whether to invoke the target thread to execute the target task, wherein in a case where it is determined that a system time is within the target execution time period, the target thread is invoked to execute the target task; and in a case where it is determined that the system time is not within the target execution time period, a waiting operation is executed until the system time is within the target execution time period, at which point the target thread is invoked to execute the target task.

18. A non-transitory computer-readable storage medium, wherein
the non-transitory computer readable storage medium stores a computer program which implements the operations of the method according to any one of claims 1 to 16 when being executed by a processor.

19. An electronic device, comprising a memory, a processor, and a computer program which is stored in the memory and may executable on the processor, wherein
the processor is configured to implement the operations of the method according to any one of claims 1 to 16 when executing the computer program.

20. A computer program product comprising a computer program, wherein
the computer program implements the operations of the method according to any one of claims 1 to 16 when being executed by a processor.
